# EUROPÄISCHE PATENTSCHRIFT

(11) **EP 1 819 501 B1**
(45) Veröffentlichungstag und Bekanntmachung des Hinweises auf die Patenterteilung: **31.12.2008**
(21) Anmeldenummer: 05800701.4
(22) Anmeldetag: 15.11.2005
(51) Int. Cl.: B29C 69/00, B29C 65/18, B65B 7/16, B65B 7/28, B65D 17/50, B21D 51/44

(54) **SIEGELMASCHINE UND VERFAHREN**
SEALING MACHINE AND METHOD
MACHINE A SCELLER ET PROCÉDÉ

(30) Priorität: 19.11.2004 CH 19202004; 15.02.2005 CH 2752005
(43) Veröffentlichungstag der Anmeldung: 22.08.2007
(73) Patentinhaber: Soudronic AG, 8962 Bergdietikon (CH)
(72) Erfinder: GYSI, Peter, CH-5454 Bellikon (CH); OBERHOLZER, Marcel, CH-8963 Kindhausen (CH)
(74) Vertreter: Schalch, Rainer
(86) Internationale Anmeldenummer: PCT/CH2005/000675
(87) Internationale Veröffentlichungsnummer: WO 2006/053457

(56) Entgegenhaltungen:
- EP-A- 0 408 268
- EP-A- 1 153 840
- WO-A-20/04101192
- DE-A1- 4 332 306
- FR-A- 2 673 911
- US-A- 5 069 355
- US-A- 5 353 943
- US-A- 5 752 614
- US-A1- 2003 062 370
- US-B1- 6 427 862

## Beschreibung

Diese Anmeldung beansprucht die Priorität der Schweizer Patentanmeldungen Nr. 01920/04 und 275/05, die am 19. November 2004 resp. 15. Februar 2005 eingereicht wurden.

### Hintergrund

Die vorliegende Erfindung betrifft ein Verfahren nach Anspruch 1 und eine Bearbeitungsmaschine nach Anspruch 9.

### Stand der Technik

Verpackungen aus verschiedensten Materialien, insbesondere Blechverpackungen, oder Hybridverpackungen, sind bekannt und werden auf vielfältige Weise eingesetzt. Für viele Verpackungen z.B. für Lebensmittel oder im Bereich von Farben und Ölen etc. existiert ein Massenmarkt; es werden jedoch auch Spezialverpackungen nachgefragt.

Kunststoff-Verpackungen bzw. Kunststoff-Verpackungsteile wie Deckel, verschließbare Ausgüsse, aufreissbare Ausgüsse, Verschraubverschlüsse etc. können billig im Spritzgussverfahren hergestellt werden und sind z.B. zur Verpackung von leicht verderblichen Lebensmitteln geeignet. Solche Verpackungen werden mechanisch eher wenig beansprucht; besitzen jedoch kompliziert gestaltete Teile, manchmal bewegliche Teile, welche mit hoher Präzision gefertigt werden müssen.

Blech-Verpackungen besitzen hohe mechanische Stabilität und dienen der Langzeit-Aufbewahrung verschiedenster Inhalte wie Lebensmittel, Farben und Lacke bis hin zur Munition oder weiteren für kürzere oder längere Zeit zu schützenden Inhalten. Der Natur der Sache nach sind wieder verschliessbare Blech-Verpackungen schwierig herzustellen und selten, insbesondere dann, wenn der Inhalt beim wieder verschließen zuverlässig isoliert und von Umwelteinflüssen abgeschlossen werden soll.

Hybrid-Verpackungen können verschiedene Vorteile vereinen: eine dem Deckel zugeordnete Aufreissfolie wird erst dann entfernt, wenn der Inhalt nach evtl. längerer Lagerdauer konsumiert werden soll. Vor allem Kunststoffdeckel sind für einen erneuten Verschluss geeignet, da ihre vergleichsweise weiche Oberfläche in der Art eines Dichtelements am Öffnungsrand der Verpackung anliegt, wenn der Rand durch den Gebrauch oder während der Lagerung nicht zu sehr verformt worden ist. Entsprechend ist es vor allem bei größeren Verpackungen notwendig, den Verpackungskörper steif auszubilden, was durch je nachdem aufwändige Verbundmaterialien erreicht werden kann.

Für einige Anwendungen sind deshalb Verpakkungselemente bekannt geworden, welche einen Bespannungsträger, z.B. einen Deckelring aus Blech, wie Weissblech oder Aluminium, aufweisen, der mit einer Folie bespannt ist. Die Folie überspannt und verschliesst die Entnahmeöffnung der Verpackung. Nach Entfernen der Folie kann ein wiederverwendbarer Deckel zum temporären Verschluss der Entnahmeöffnung eingesetzt werden, wobei die Stabilität des Deckelrings die Verschliesswirkung beeinflusst. Unabhängig von der Frage der Wiederverschliessbarkeit können solche Deckelringe z.B. durch Bördelung an einen Verpakkungskörper aus Blech angeformt werden, mit dem Vorteil, dass dann ein Deckel aus Blech entfällt, der entweder mit dem Dosenöffner geöffnet oder aufwändig als geritzter Aufreissdeckel hergestellt werden muss.

Deckelringe der genannten Art werden bevorzugt auf Linearmaschinen (oder auch auf den aufwändig konstruierten Karussellmaschinen) hergestellt. Bei Linearmaschinen handelt es sich um eine Anordnung von hintereinander geschalteten Bearbeitungsstationen, welche durch einen taktgesteuerten Transport für zu bearbeitende Teile miteinander verbunden sind und ebenfalls taktgesteuert betrieben werden, so dass während jedem Takt jede Arbeitsstation ihren Arbeitsschritt an dem gerade passierenden Werkstück ausführt.

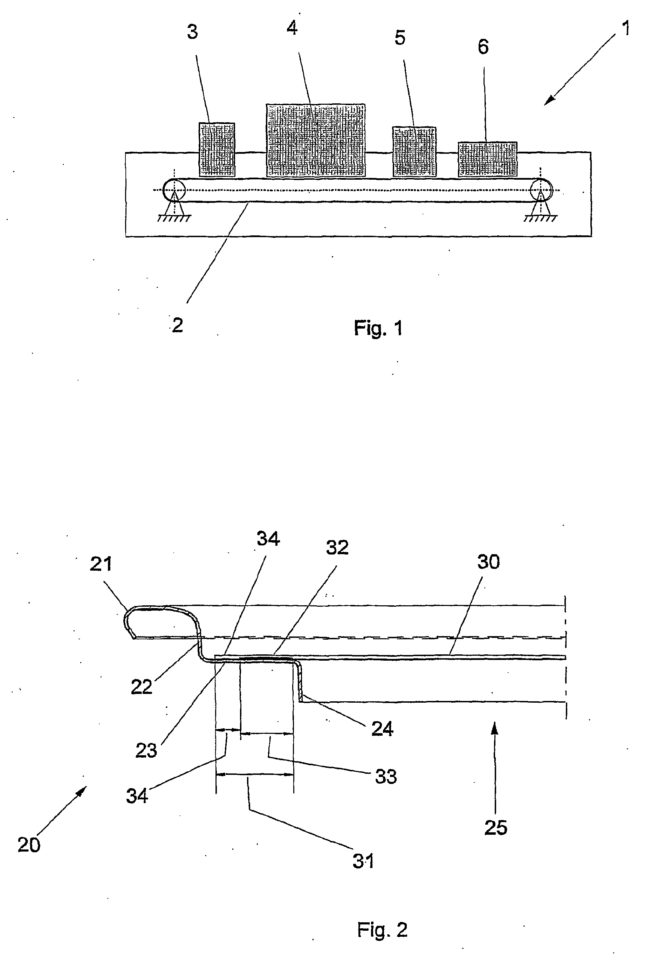

Eine bekannte Maschine der genannten Art zeigt Figur 1. Schematisch dargestellt sind eine als Linearmaschine 1 ausgebildete Bearbeitungsmaschine, mit einem durch sie hindurch verlaufenden, z.B. als Kettentransport 2 ausgebildeten Vorschub für zu bearbeitende Teile, der die weiteren Bearbeitungsstationen bedient:
Vorgesehen ist ein Magazin 3 für Deckelringe 20 (Figur 2), in der die Ringe 20 vereinzelt und taktweise an den Transport 2 übergeben werden können, so dass sie im Bearbeitungstakt die weiteren Bearbeitungsstationen passieren und schließlich über eine Ausgabestation 6, inzwischen mit einem Folienzuschnitt bespannt, aus der Maschine 1 ausgegeben werden können.

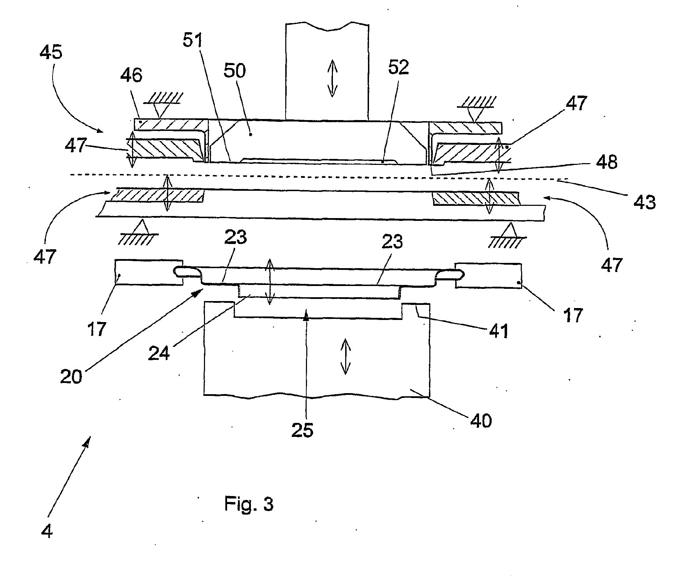

Eine Positionierungsstation 4 ist als Kombistation für mehrere Arbeitsschritte ausgebildet und in Figur 3 näher dargestellt. Der Station 4 wird eine in der Figur nicht gezeigte Folienbahn zugeführt, aus welcher erstens Folienzuschnitte ausgestanzt und, zweitens, auf dem Deckelring 20 positioniert werden. Unmittelbar auf die Positionierung erfolgt, drittens, die Verbindung von Folienzuschnitt und Deckelring 20. (Bevorzugt ist die Folienbahn, und damit der ausgestanzte Folienzuschnitt, mit einem durch Erwärmung aktivierbaren Klebstoff beschichtet, was erlaubt, die Verklebung unter Erwärmung von Dekkelring 20 und/oder des Folienzuschnitts vorzunehmen). Der dann mit dem Folienzuschnitt bespannte Deckelring 20 gelangt anschließend über den Kettentransport 2 in eine Falz- und Prägestation 5.

In dieser wird eine allfällige, am Folienzuschnitt vorgesehene Aufreisslasche umgefalzt, so dass Sie an diesen anliegt, und gegebenenfalls eine Prägung in den Folienzuschnitt eingebracht. Die Station 6 dient, wie erwähnt, als Ausgabestation für die mit einer Folie bespannten Deckelringe 20.

Anstelle der Begriffe "Verklebung bzw. verkleben" werden im Stand der Technik für die vorliegende Verbindungstechnik auch die Begriffe "Siegelung oder siegeln" verwendet.

Figur 2 zeigt einen Querschnitt durch einen mit einer Folie bespannten, aus Blech, z.B. Weißblech bestehenden, als Deckelring 20 ausgebildeten Bespannungsträger gemäss Stand der Technik. Er kann einen Außendurchmesser von 56 Millimeter oder weniger, aber auch bis zu 153 Millimeter oder mehr aufweisen. Dessen äusserer Rand 21 dient der späteren Verbindung mit dem Körper einer Verpackung, sei diese ebenfalls aus Weißblech oder aus einem anderen, metallischen oder nichtmetallischen Material. Dass Ringinnere besteht aus einem Wandabschnitt 22, an welchem sich eine Schulter 23 anschließt, die wiederum durch einen umgefalzten inneren Rand 24 begrenzt ist. Durch den Wandabschnitt 22 wird einerseits die eher empfindliche Verbindungsstelle zwischen Deckelring 20 und Folienzuschnitt 30 in das geschützte Innere des Deckelrings 20 verlegt und andererseits eine Anlagefläche für einen wieder verwendbaren Deckel, welcher zur Entlastung der Figur nicht weiter dargestellt ist, geschaffen. Der innere Rand 24 ist umgefalzt, damit bei entferntem Folienzuschnitt 30 keine Verletzungsgefahr durch den scharfen Blechrand besteht. Im Gesamten verleiht diese mehrfach gefalzte Struktur dem Deckelring 20 erhebliche mechanische Stabilität.

Der Folienzuschnitt 30 kann aus einer Verbundfolie mit verschiedenen Schichten bestehen; er besitzt jedenfalls, wie oben erwähnt, an einer Außenseite eine Schicht eines vorzugsweise durch Wärme aktivierbaren Klebstoffs wie Polyethylen oder Polypropylen etc. Es liegt jedoch durchaus im Bereich der Erfindung, dass der Klebstoff nicht fest auf der Folie aufgebracht ist, z.B. separat zugeführt wird. Die anderen Schichten können metallischer oder nichtmetallischer Natur sein, je nach den bevorzugten Eigenschaften der Folie bezüglich mechanischer Festigkeit, Korrosionsresistenz oder Konservierungsfähigkeiten etc..

Wie die Figur zeigt, überlappen sich Folienzuschnitt 30 und Schulter 23 in einer durch einen Pfeil angedeuteten Überlappungszone 31. Die Klebeverbindung 32 ist allerdings nicht in der ganzen Überlappungszone 31 ausgebildet, sondern nur in einer Verbindungszone 33. Ein äusserster Randabschnitt 34 des Folienzuschnitts 30 verbleibt unverklebt. Die Zone 33 und der Abschnitt 34 sind ebenfalls durch Pfeile in der Figur angedeutet.

Der Folienzuschnitt 30 überspannt die Öffnung 25 des Deckelrings 20. Obschon in der Figur ein rotationssymmetrischer Bespannungsträger abgebildet ist, werden auch nicht runde, d.h. ovale, rechteckige und weitere Formen mit einem Folienzuschnitt bespannt und zum genannten Zweck eingesetzt; die erfindungsgemässe Lehre kann uneingeschränkt auf alle Konfigurationen von Bespannungsträgern angewendet werden und ist nicht auf den in den Figuren rund dargestellten Deckelring 20 eingeschränkt. Der Begriff "Deckelring" ist in diesem weiten Sinn zu verstehen.

Die Überlappungszone 31 besitzt eine Breite von 3 mm und die Verbindungszone 33 eine Breite von 2 mm, was bei einem häufigen Außendurchmesser des Deckelrings 20 von z.B. 76 mm oder auch mehr einen Berstdruck (das heißt einen Druck, bis sich der verklebte Folienzuschnitt von Deckelring löst) von 2 Bar oder höher erlaubt.

Figur 3 zeigt die im Stand der Technik bekannte Positionierungsstation 4 von Figur 1 im Querschnitt. Bewegliche Teile sind durch den die Richtung der Hin-und Herbewegung andeutenden Doppelpfeil gekennzeichnet; unbewegliche Teile durch das die feste Befestigung in der Station 3 andeutende Symbol. Zur Entlastung der Figur weggelassen sind die Antriebe für die beweglichen Teile sowie weitere Organe der Station 4, welche für deren Funktion notwendig sind; der Fachmann kann weggelassene Teile und Organe dieser konventionellen Bearbeitungsstation jederzeit aus eigener Kenntnis ergänzen.

Die Figur zeigt Transportnocken 17 des Kettentransports 2, welche einen Deckelring 20 verarbeitungsfähig stützen. Unter dem Deckelring 20 befindet sich ein Auflager 40 mit einer Stützfläche 41 für die Schulter 23 des Deckelrings 20. Fährt das Auflager 40 nach oben, schlägt es mit der Stützfläche 41 an der Schulter 23 an und hebt den Deckelring 20 ebenfalls mit nach oben.

Eine Folienbahn 43 ist durch die gestrichelte Linie angedeutet und verläuft quer durch die Positionierungsstation 4.

Ein Folienschneidwerkzeug 45 mit einem Messer 46 und einer Greifer 47 aufweisenden Greiferzange ist derart angeordnet, dass die Folienbahn 43 durch die Greiferzange hindurch verläuft und von dieser über eine Schliessbewegung festgeklemmt und angehoben werden kann.

Oberhalb der Greiferzange 47 befindet sich das Messer 46, welches eine gegen unten weisende Schneidkante 48 aufweist. Die Schneidkante 48 besitzt die Form des auszustanzenden Folienzuschnitts 30.

Durch den Zugriff der Greiferzange 47 wird die Folienbahn 43 in ihrer Lage fixiert. Verfährt die Greiferzange 47 anschließend nach oben, gelangt die Folienbahn 43 in Kontakt mit der Schneidkante 48; verfährt die Greiferzange 47 noch weiter nach oben, stanzt das Messer 46 einen Folienzuschnitt 30 aus der Folienbahn 43 aus. Der Umriss des Folienzuschnitts 30 entspricht der Aussenkontur der Schneidkante 48.

Weiter dargestellt in der Figur ist ein als Stempel 50 ausgebildetes Positionierungsmittel für den Folienzuschnitt 30, mit einem wirksamen Oberflächenbereich 51, und einem von diesem umschlossenen Unterdruckabschnitt 52, in welchem durch eine in der Figur nicht dargestellte Leitung durch Absaugen von Luft ein Unterdruck erzeugt werden kann.

Während dem Stanzvorgang ist der Stempel 50 in einer oberen Endlage derart gegenüber der Greiferzange und dem Messer 46 angeordnet, dass sein wirksamer Oberflächenbereich 51 in der durch die Schneidkante 48 des Messers 46 aufgespannten Ebene liegt. Entsprechend legt sich die Folienbahn 43 während dem Stanzvorgang an den Oberflächenbereich 51 an. Die gleichzeitige Aktivierung eines Unterdruckes im Unterdruckabschnitt 52 hat zur Folge, dass der ausgestanzte Folienzuschnitt 30 am Oberflächenbereich 51 haften bleibt. Bewegt sich nun der Stempel 50 mit dem auf ihm haftenden Folienzuschnitt 30 nach unten, in seine untere Endlage, kann er den Folienzuschnitt 30 auf der Schulter 23 des auf dem Auflager 40 ruhenden Deckelrings 20 klebefähig positionieren. Stempel 50 und Auflager 40 befinden sich dann in Verklebeposition und schließen über deren einander unmittelbar zugewendeten Oberflächenbereiche, nämlich des Oberflächenbereichs 51 und der Stützfläche 41, Folienzuschnitt 30 und Deckelring 20 für eine Verklebung im Kontakt zwischen sich ein. In der Figur nicht dargestellte Heizelemente, welche vorzugsweise im Auflager 40 und in Stempel 50 angeordnet sind, erzeugen die notwendige Wärme, um in Verklebeposition die auf der Folie befindliche Kleberschicht zu verflüssigen und so den Klebevorgang auszulösen. Stempel 50 und Auflager 40 wirken als Mittel zur Verklebung für den Folienzuschnitt 30 und den Deckelring 20.

Je nach Art der verwendeten Folie bzw. der verwendeten Klebemasse kann für den Verklebungsschritt zusätzlich Druck auf die Verbindungszone 33 aufgebracht werden. Durch einen entsprechend ausgebildeten Antrieb wird dann der Stempel 50 mit der notwendigen Kraft gegen unten gepresst, wo dann der Deckelring 20 mit dem Folienzuschnitt 30 zwischen den Oberflächenbereichen 41 und 51 verpresst wird.

Zusammenfassend fahren Auflager 40 und Stempel 50 voneinander weg, damit der Transport 2 einen neuen Deckelring 20 in Arbeitsposition bringen bzw. damit ein mit dem Folienzuschnitt 30 bespannter Deckelring 20 aus der Station 3 abgeführt werden kann, und fahren aufeinander zu, um den Folienzuschnitt 30 auszustanzen, auf dem Deckelring 20 zu positionieren und schliesslich zu verkleben.

Besonders vorteilhaft an der in Figur 3 gezeigten Konfiguration ist, dass sie verschiedene Funktionen in einer einzigen Bearbeitungsstation vereint, wobei mit dem Ausstanzen eines Folienzuschnitts 30, abgesehen vom Abstand, seine Position gegenüber der Schulter 23 des Deckelrings 20 bereits definiert ist. Einmal entfällt so der Aufwand für eine separate Station (wie sie in Stand der Technik ebenfalls bekannt ist) zum Ausstanzen von Folienzuschnitten 30, ebenso entfällt dann eine notwendige zusätzliche Zuführ- und Positioniereinrichtung. Die gezeigte Konfiguration erlaubt so eine wesentlich erhöhte Taktrate bis in den Bereich von 80 bis 100 Takten pro Min, weil die bisher notwendige, in erheblichem Maß zeitraubende Lagepositionierung entfällt.

Nachteilig an der in der Figur 3 gezeigten Konfiguration ist, dass die Bewegungsvorgänge (Ausstanzen des Folienzuschnitts 30 und Absenken des Stempels 50 in Verklebeposition) immer noch einen erheblichen Teil der Taktzeit in Anspruch nehmen, so dass für den Verklebevorgang selbst nur noch eine beschränkte Restzeit zur Verfügung steht, mit der Konsequenz, dass die Taktrate nicht weiter gesteigert werden kann.

EP-A-0 408 268 geigt ebenfalls ein gattungsgemässes Vorgehen bzw. eine gattungsgemässe Bearbeitungsmaschine.

### Darstellung der Erfindung

Entsprechend ist es Aufgabe der vorliegenden Erfindung, eine Bearbeitungsmaschine bereitzustellen, welche eine Taktrate von über 100 Takten pro Minute erlaubt.

Diese Aufgabe wird gelöst durch ein Verfahren nach Anspruch 1 und durch eine Bearbeitungsmaschine nach Anspruch 9.

Dadurch, dass der Verklebungsvorgang in mehrere Teilschritte zerlegt wird, steht für die Verklebung mehr Zeit zur Verfügung, als es einem einzelnen Takt der Bearbeitungsmaschine entspricht. Damit kann die Taktzeit verkürzt bzw. die Taktzahl erhöht werden. Dadurch, dass für die Positionierung des Folienzuschnitt 30 auf dem Deckelring 20 die oben beschriebene konventionelle Positionierungsstation weiterhin einsetzbar ist, kann die Positionierung des Folienzuschnitts 30 auf den Deckelring 20 weiterhin auf einfache Weise ohne zusätzliche Positionierungsmittel vorgenommen werden.

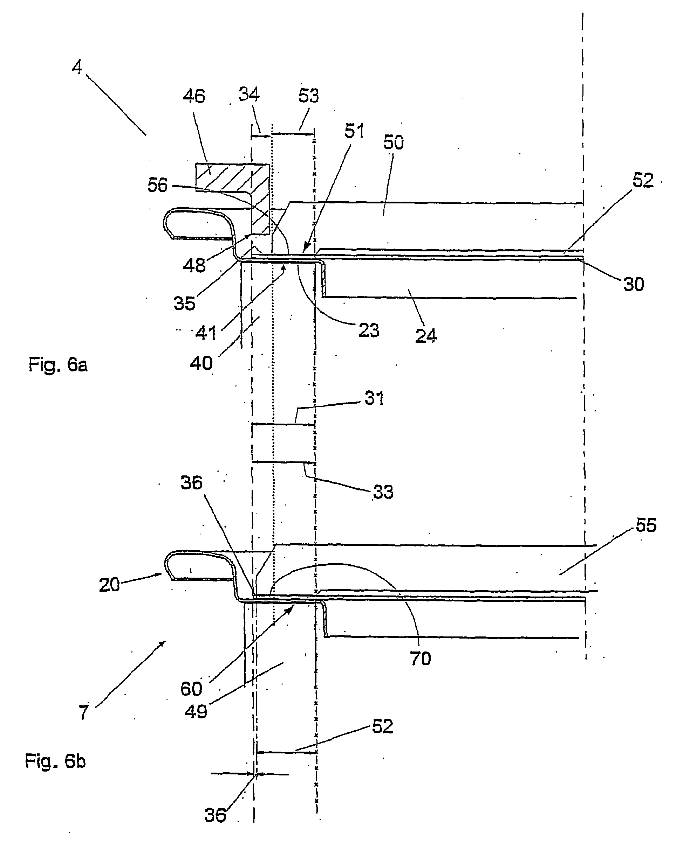

Bei einer bevorzugten Ausführungsform des erfindungsgemässen Verfahrens nach Anspruch 3 kann über die gestellte Aufgabe hinaus ein verbesserter Deckelring 20 bzw. ein verbesserter mit einer Folie bespannter Deckelring 20 hergestellt werden: Da der erste Verklebungsschritt in der Positionierungsstation 4 nur in einem vorbestimmten Teilbereich 56 (s. Figur 6a) der Verbindungszone 33 zwischen Folienzuschnitt 30 und Deckelring 20 erfolgt, kann der zusätzliche Verklebungsschritt in der weiteren Bearbeitungsstation im bisher nicht verklebten, äußersten Randabschnitt 34 des Folienzuschnitts 30 vorgenommen werden, mit der Konsequenz, dass sich die notwendige Breite der Schulter 23 von 3 mm auf 2 mm reduziert (wie auch zu Fig. 6a und Fig. 6b erläutert).

Die verringerte Breite der Schulter bewirkt einerseits eine erhebliche Materialersparnis, da bei der Massenproduktion von Verpackungen der Materialverbrauch den höchsten Kostenanteil bildet; andererseits eine verbesserte Funktionalität, da die Verpackung im Gebrauch durch Umkippen noch besser bzw. nun nahezu vollständig entleert werden kann.

Wie eingangs geschildert, kommen die Vorteile der Erfindung insbesondere in einer als Linearmaschine ausgebildeten Bearbeitungsmaschine zum Tragen, da die Taktzeit verringert und damit der Takt erhöht werden kann. In einer Karrussellmaschine besteht das Problem der Taktzeit insofern nicht, als der Durchmesser des Karrussells der benötigten Verarbeitungszeit anpassbar ist. Wo z.B. räumliche Gründe den Durchmesser eines Karrussells begrenzen, ergeben sich die Vorteile der Erfindung analog auch bei einer Karrussellmaschine.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Figuren 1-3 den erläuterten Stand der Technik;
Figur 4 schematisch eine erfindungsgemässe, als Linearmaschine ausgebildete Bearbeitungsmaschine,
Figur 5 schematisch einen Ausschnitt einer weiteren Bearbeitungsstation 7 der Maschine von Figur 4 zur Ausführung des weiteren Verklebungsschritts,
Figur 6 a einen Querschnitt durch einen Dekkelring 20, der in der Positionierungsstation 4 mit dem Folienzuschnitt 30 in einem vorbestimmtem Teilbereich 56 der Verbindungszone 33 verklebt wird,
Figur 6 b einen Querschnitt durch den Deckelring 20 von Figur 6 a, der in der weiteren Bearbeitungsstation 7 dem zusätzlichen Verklebungsschritt unterworfen wird, und

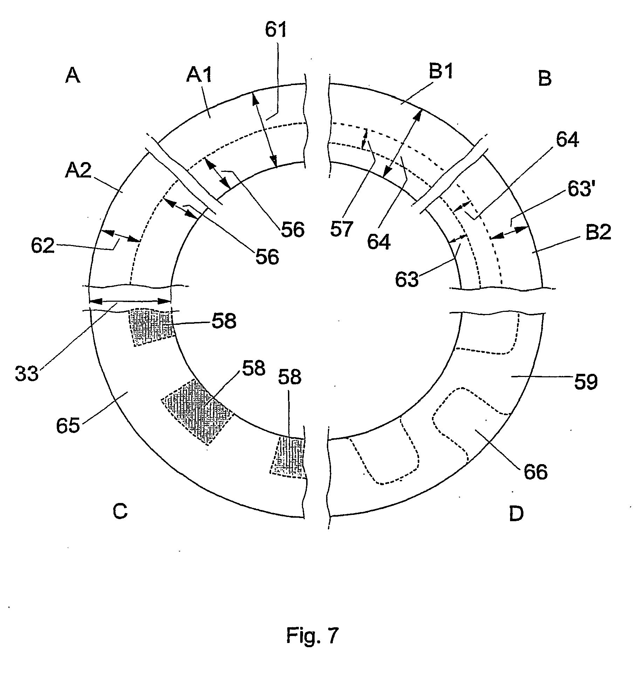

Figur 7 einige Beispiele für die Ausbildung der ersten, vorbestimmt teilweisen Verklebung und des ergänzenden weiteren Verklebungsschritts.

### Wege zur Ausführung der Erfindung

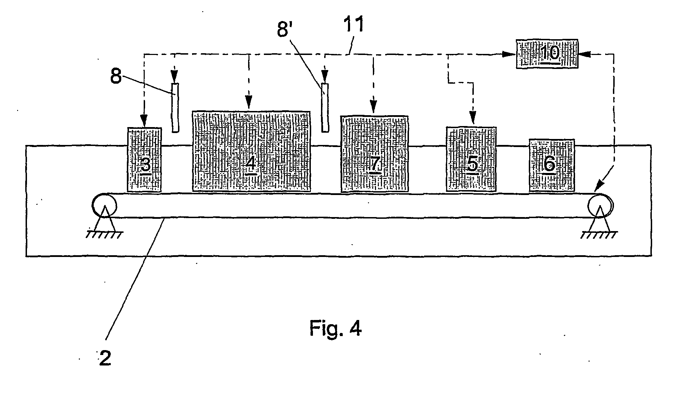

In Figur 4 ist die Bearbeitungsmaschine von Figur 1 dargestellt, erfindungsgemäss ergänzt um eine weitere Bearbeitungsstation 7 sowie um Vorwärmstationen 8 bzw. 8'. Eine Steuerung 10 ist über Datenleitungen 11 betriebsfähig mit den Stationen 3 bis 8' sowie dem Transport 2 verbunden.

In der Vorwärmstation 8 sind Heizmittel vorgesehen, welche z.B. durch Induktion die durch den Transport 2 der Positionierungsstation 4 zugeführten Deckelringe 20 vorwärmen. Ebenso besitzt die Vorwärmstationen 8' solche Heizmittel, um die aus der Positionierungsstation 4 abgegebenen Deckelringe 20 (mit dem bereits z.B. in einem vorbestimmten Teilbereich der Verbindungszone 33 verklebten Folienzuschnitt 30) in Wärme zu halten, also z.B. eine Abkühlung zu verhindern bzw. auf eine gewünschte Temperatur zu bringen, bevor in der weiteren Bearbeitungsstation 7 der zusätzliche Verklebungsschritt vorgenommen wird.

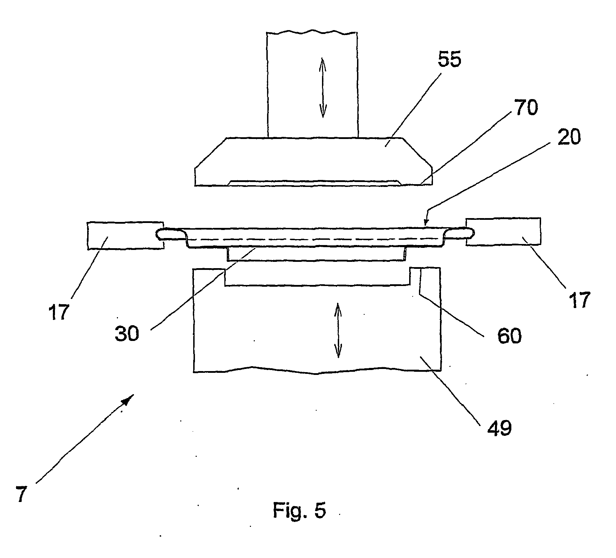

Figur 5 zeigt einen Ausschnitt aus der weiteren Bearbeitungsstation 7, in welcher der zusätzliche Verklebungsschritt erfolgt, und welche in ihrem Aufbau grundsätzlich der Positionierungsstation 4 entspricht. Allerdings ist ein Folienschneidwerkzeug 45 nicht vorgesehen. Dargestellt sind Mittel zur fortgesetzten Verklebung des Deckelrings 20 mit dem Folienzuschnitt 30, nämlich ein Auflager 49 und ein Stempel 55 mit den zugehörigen, einander unmittelbar zugewendeten Oberflächenbereichen 60 und 70. Der mit einem Folienzuschnitt 30 teilweise verklebte Deckelring 20 ist durch die Transportnocken 17 verarbeitungsfähig gehalten.

Wie in der Positionierungsstation 4 können in der Bearbeitungsstation 7, wenn das Auflager 49 und der Stempel 55 voneinander weggefahren sind, Deckelringe 20 zwischen diese eingefahren bzw. aus diesen ausgegeben werden; ebenso befinden sich Auflager 49 und Stempel 55, gegeneinander gefahren, in Verklebeposition für die fortgesetzte Verklebung und schließen den Deckelring 20 mit seinem Folienzuschnitt 30 in Klebeposition und im Kontakt zwischen sich ein.

Die wirksamen Oberflächenbereiche 60,70 besitzen vorzugsweise eine andere Ausgestaltung bzw. Geometrie als diejenige der wirksamen Oberflächenbereiche 41,51 und wirken entsprechend vorzugsweise in ungleiche Bereiche der Verbindungszone 33 von Deckelring 20 und Folienzuschnitt 30 ein, wie dies in Figur 7 beispielhaft gezeigt ist.

Zur Verdeutlichung der hintereinander erfolgenden Verklebungsschritte zeigen die Figuren 6 a und 6 b denselben Deckelring 20, der sich (zuerst) gemäss Figur 6a in der Positionierungsstation 4 befindet und dann (im nächsten Takt) gemäss Figur 6b in der weiteren Bearbeitungsstation 7. Die Figuren sind derart übereinander angeordnet, dass mit Hilfe der gestrichelten, punktierten und gekreuzten Linien der Fortschritt der Verklebung erkannt werden kann.

Zwischen der gestrichelten und der gekreuzten Linie wird die Überlappungszone 31 von Schulter 23 und Folienzuschnitt 30 markiert. Vorliegend, und vorteilhafterweise, entspricht die Überlappungszone 31 zugleich der Verbindungszone 33 zwischen Deckelring 20 und Folienzuschnitt 30. Dies im Unterschied zum konventionellen Dekkelring 20 nach Figur 1, wo die Verbindungszone 33 weniger breit ist als die Überlappungszone 31, und damit ein äußerster Randabschnitt 34 unverklebt verbleibt, was nachteilig ist.

Wie erwähnt zeigt Figur 6a den Deckelring 20 in der Positionierungsstation 4, mit bereits positioniertem Folienzuschnitt 30, im Moment der Verklebung. Der Deckelring 20 ruht mit der Schulter 23 auf der Stützfläche 41 des Auflagers 40. Der Stempel 50 ist über seine wirksame Oberfläche 51 in Kontakt mit dem Folienzuschnitt 30, wobei sich die wirksame Oberfläche 51 und die Stützfläche 41 in einer zwischen der punktierten und der gekreuzten Linie gelegenen Überdeckungszone 53 überdecken.

Im Auflager 40 und/oder im Stempel 50 angeordnete Heizmittel (welche zur Entlastung der Figur weggelassen sind) erwärmen die einander zugewendeten Oberflächenbereiche 41,51, so dass in der Überdeckungszone 53 die Verklebung erzeugt wird. Da diese weniger breit ist als die Verbindungszone 33, ergibt sich vorerst eine Verklebung nur im entsprechenden vorbestimmten Teilbereich 56 der Verbindungszone 33.

Da für das Ausstanzen des Folienzuschnitts 30 der Stempel 50 in das Innere des hülsenartig ausgebildeten Messers 46 zurück gezogen werden muss, kann sein Außendurchmesser nicht größer sein als der Innendurchmesser des die Schneidkante 48 tragenden Abschnitts des Messers 46, mit der Folge, dass der noch unverklebte Randabschnitt 34 nicht vermieden werden kann.

Figur 6b zeigt den Deckelring 20 in der weiteren Bearbeitungsstation 7, wo der zusätzliche Verklebungsschritt ausgeführt wird. Der Deckelring 20 ist im Bereich der Überdeckungszone 52 zwischen der Stützfläche 60 des Auflagers 49 und der wirksamen Oberfläche 70 des Stempels 55 eingespannt. Zur Entlastung der Figur wiederum weggelassene Heizmittel im Auflager 45 und/oder im Stempel 55 erwärmen die Oberflächen 60,70, soweit dies für die Verklebung notwendig ist. Da die Überdeckungszone 52 der Verbindungszone 33 entspricht (und somit breiter ist als die Überdeckungszone 53), wird diese nun vollständig verklebt und der vorbestimmte Teilbereich 56 (Figur 6a) gleichzeitig durch erneute Erwärmung überklebt.

Vorzugsweise, aber nicht zwingend, kann die Überdeckungszone 52 auch so bemessen werden, dass ein vergleichsweise sehr kleiner Randbereich 36 immer noch unverklebt bleibt, damit eventuell während dem Klebevorgang gegen den Rand der Verbindungszone 33 quellende Klebemasse nicht nach aussen austritt und den Deckelring verschmutzt.

Bevorzugt weist die Verbindungszone 33 eine Breite von zwei mm auf, was bei aus bekannten Folien (z.B. ALUFIX von Alcan) gestanzten Folienzuschnitten 30 mit einem Durchmesser bis zu 96 Millimeter einen Berstdruck von über 2 Bar ermöglicht. Ein hoher Berstdruck ist z.B. dann notwendig, wenn der Verpackungsinhalt sterilisiert werden soll.

Die Dicke des die Schneidkante 48 tragenden Abschnitts des Messers 46, so wie es im Stand der Technik Verwendung findet und in Figur 3 bzw. 6a dargestellt ist, beträgt ca. einen Millimeter, mit der Folge, dass die Überdeckungszone 53 ebenfalls eine Breite von einem Millimeter aufweist, was dann auch für den noch unverklebten Randabschnitt 34 zutrifft.

Im zusätzlichen Verklebungsschritt kann der vorbestimmte Teilbereich 56, wie bereits angedeutet, ohne weiteres noch einmal überklebt (das heißt durch Wärmeeintrag noch einmal dem Verklebungsprozess unterworfen) werden. Alternativ, je nach Folie bzw. verwendeter Klebemasse, kann auch die Lage der Überdeckungszone 52 ausschließlich (oder teilweise) komplementär zum vorbestimmten Teilbereich 56 gewählt werden, so dass sich die Überdeckungszone 52 und der vorbestehende Teilbereich 56 zur Verbindungszone 33 ergänzen (siehe Figur 7).

Bei Verwendung der oben beschriebenen, bevorzugten Ausführungsform der erfindungsgemässen Lehre genügt es somit, die Schulter 23 des Deckelrings 20 mit einer Breite von nur 2 mm auszubilden, im Gegensatz zum Stand der Technik, wo die notwendige Schulterbreite 3 Millimeter beträgt: Figur 6 a zeigt, dass in einer Positionierungsstation 4 gemäss Stand der Technik auf Grund der Lage des Messers 46 eine Verklebung über die gesamte Überlappungszone 31 nicht möglich ist.

Bei einer weiteren Ausführungsform besitzt die Verbindungszone 33 eine Breite von weniger als 2 mm, bis zu 1,0 mm und der vorbestimmte Teilbereich eine solche von 1,5 bis 0,5 mm.

Figur 7 zeigt schematisch eine Ansicht einer Verbindungszone 33, unterteilt in vier Sektoren A, B, C und D. Jeder Sektor dient der Darstellung eines Ausführungsbeispiels dafür, wie die erste Verklebung in der Positionierungsstation 4 und der darauffolgende, weitere Verklebungsschritt in der Bearbeitungsstation 7 vorgenommen werden können. Die Sektoren A und B sind unterteilt in Untersektoren A 1 und A 2 bzw. B 1 und B 2, wobei im ersten Untersektor eine Überklebung und im zweiten Sektor eine komplementäre Verklebung dargestellt ist.

Der Untersektor A 1 zeigt die Verhältnisse gemäss den Figuren 6a und 6b. Der vorbestimmte Teilbereich 56 liegt auf der Innenseite der Verbindungszone 33; ein Bereich der weiteren Verklebung 61 (entsprechend der Überdeckungszone 52 von Figur 6b) entspricht der gesamten Verbindungszone 33, so dass der vorbestimmte Teilbereich 56 (noch einmal) überklebt wird.

Im Gegensatz dazu zeigt der Sektor A 2 eine komplementäre Verklebung, da nach dem vorbestimmten Teilbereich 56 ein ergänzender Teilbereich 62 durch den weiteren Verklebungsschritt verklebt wird. Ein Überkleben findet nicht statt. Die Rücksprungzone von Stempel 55 und/oder Auflager 49 (in der weiteren Bearbeitungsstation 7) entspricht in ihrer Kontur dem kontaktwirksamen Oberflächenbereich von Stempel 50 und/oder Auflager 40 in der Positionierungsstation 4, d.h. der Überdeckungszone 53.

Eine Überklebung kann dann vorteilhaft sein, wenn während der ersten Verklebung im vorbestimmten Teilbereich 56 die Verklebung nicht vollständig ausgebildet worden ist, sei es durch zu kurze Verweildauer in der Bearbeitungsstation 4 oder durch ungenügende Wärmezufuhr im vorbestimmten Teilbereich 56.

Eine für vollständige Verklebung zu kurze Verweildauer in der Bearbeitungsstation 4 kann gewählt werden, wenn die Taktzahl so hoch, das heißt die Taktzeit so kurz ausfällt, das das Ausstanzen und Positionieren des Folienzuschnitts 30 zu viel von der zur Verfügung stehenden Taktzeit konsumiert. Eine ungenügende Wärmezufuhr kann sich dann ergeben, wenn der Temperaturgradient zu groß gewählt werden müsste, um innerhalb der zur Verfügung stehenden Resttaktzeit die vollständige Durchwärmung der Klebemasse zu gewährleisten oder aus anderen Gründen die Temperatur unter der für das vollständige Verfliessen der Klebemasse notwendigen Höhe gehalten werden soll.

Der Fachmann kann im konkreten Fall, d.h. je nach verwendeter Folie, Taktzeit, geometrische Ausbildung des vorbestimmten Teilbereichs 56 und geforderter Beanspruchbarkeit der Verklebung (Berstdruck), gegebenenfalls durch Versuche, zwischen komplementärer Verklebung und Überklebung (allenfalls teilweiser Überklebung) wählen.

Sektor B zeigt einen vorbestimmten Teilbereich 57, der nicht mehr am inneren Rand des Verbindungsbereichs 33 liegt, sondern schmaler und gegen dessen Mitte hin versetzt ist; bevorzugt beträgt die Breite des Teilbereichs 57 0,5. mm, kann aber auch von diesem Mass abweichen. Solch eine Konfiguration kann gewählt werden, wenn der Folienzuschnitt 30 in der Positionierungsstation 4 nach der Positionierung nur angeheftet werden und die Verklebung hauptsächlich in der Bearbeitungsstation 7 stattfinden soll. Wiederum zeigt der Untersektor B 1 den vorbestimmten Teilbereich 57 sowie den Bereich der weiteren Verklebung 64 im Fall des Überklebens und der Untersektor B 2 die ergänzenden Teilbereiche 63,63' im Fall der komplementären Verklebung.

Sektor C zeigt einzelne, in einem regelmässigen Muster verteilte, vorbestimmte Unterbereiche 58, welche in der Positionierungsstation 4 verklebt werden. Ein ergänzender Teilbereich 65 wird dann in der weiteren Bearbeitungsstation 7 komplementär verklebt; wie oben ausgeführt kann auch eine vollständige Überklebung vorgenommen werden. Verteilte, vorbestimmte Unterbereiche 58 werden dadurch erzeugt, dass im wirksamen Oberflächenbereich 51 (Figur 6a) durch Abtragung von Oberflächenmaterial Rücksprünge eingearbeitet werden, so dass die Oberfläche 51 den Verbindungsbereich 33 nur noch in den gewollten Unterbereichen 58 berühren kann. Ebenso für die ergänzende Teilfläche 65 des Stempels 55 etc.

Verteilte Oberflächenbereiche 58 kann der Fachmann z.B. anstelle eines schmalen, ununterbrochenen Teilbereichs 57 je nach Folie und Verklebungsparametern vorsehen, z.B. dann, wenn eine Folien bei der Verklebung nicht zur Verwerfung neigt, also punktweises Vorheftung genügt oder aus anderen Gründen angezeigt ist.

Eine weitere Ausbildungsmöglichkeit zeigt Sektor D, wo der vorbestimmte Teilbereich 59 sich längs und quer durch den Verklebungsbereich 33 erstreckt, was im Fall einer Folie sinnvoll sein kann, die bei der Verklebung oder beim anschliessenden Transport zur Verwerfung neigt. Der Bereich der weiteren Verklebung 66 kann komplementär oder via Überklebung verklebt werden. Gegebenenfalls ist bei dieser Anordnung ein unverklebter Randbereich unvermeidlich oder der Teilbereich 59 nicht über die ganze Breite der Zone 33 auszudehnen.

Weiter ist es für gewisse Anwendungen günstig, wenn sowohl die erste Verklebung in der Positionierungsstation 4 als auch die zweite Verklebung in der Bearbeitungsstation 7 in der ganzen Verbinzungszone 33 erfolgen, mit der Konsequenz, dass die ganze Klebeverbindung zweimal ausgebildet wird. Die Überdeckungszonen 52 und 53 sind dann identisch, ebenfalls allfällige Rücksprünge in den wirksamen Oberflächenbereichen von Stempel und Auflager.

Z.B. im Fall kürzester Taktzeiten ist es vorteilhaft, durch die Vorwärmstation 8 den Deckelring 20 vorzuwärmen bzw. durch die Vorwärmstation 8' den Deckelring mit dem teilweise verbundenen Folienzuschnitt 30 in Wärme zu halten bzw. noch weiter aufzuwärmen, so dass die Klebemasse optimal vorgewärmt, vorzugsweise kurz vor dem Zustand des Verfliessens, dem weiteren Verklebungsvorgang ausgesetzt wird.

Die Erfindung, obschon am Beispiel einer Linearmaschine erläutert, ist, wie oben erwähnt, nicht auf die Anwendung in einer Linearmschine beschränkt, das Verfahren bzw. die Ausbildung der Bearbeitungsstationen können in anderen Bearbeitungsmaschinen, wie einer Karrussellmaschine, eingesetzt werden.

Es liegt im Bereich der Erfindung, den Verklebungsvorgang in mehr als zwei Takte aufzuteilen und entsprechend noch weitere Bearbeitungsstationen für zusätzliche Verklebungsschritte vorzusehen.

Obschon das erfindungsgemässe Verfahren sowie die erfindungsgemässe Vorrichtung anhand der Herstellung von mit einem Folienzuschnitt bespannten Deckelringen aus Weissblech erläutert sind, sind diese nicht auf Weissblech beschränkt; z.B. Aluminium oder irgend ein anderes Blech sind zur Anwendung der erfinderischen Lehre gleich geeignet, einschliesslich Deckelringe aus Nichtmetall, soweit sie die geforderten mechanischen Eigenschaften, z.B. im Hinblick auf Temperaturfestigkeit, aufweisen.

Zudem können nicht nur Deckel gemäss der vorliegenden Erfindung mit einer Folie bespannt werden, sondern auch Wandabschnitte einer Verpackung, die z.B. eine Rippenstruktur aufweisen, die mit Folienabschnitten oder einer Folienbahn zu bespannen ist.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt wird.

## Patentansprüche

1. Verfahren zum Herstellen eines mit einem Folienzuschnitt (30) bespannten und einen aus Metall bestehenden Bespannungsträger aufweisenden Verpackungselements, vorzugsweise eines Deckels für eine Verpackung, in einer Bearbeitungsstationen aufweisenden Bearbeitungsmaschine, vorzugsweise einer Linearmaschine (1), bei welchem der Folienzuschnitt (30) im Bereich einer Verbindungszone (33) mit dem Bespannungsträger des Verpackungselements verklebt wird, wobei dazu in einer Positionierungsstation (4) der Bearbeitungsmaschine jeweils ein Folienzuschnitt (30) und ein Bespannungsträger klebefähig gegeneinander positioniert werden, **dadurch gekennzeichnet, dass** in dieser Positionierungsstation (4) unmittelbar auf die Positionierung eine vorbestimmt teilweise Verklebung von Folienzuschnitt (30) und Bespannungsträger erfolgt, und in einer weiteren Bearbeitungsstation (7) ein zusätzlicher Verklebungsschritt vorgenommen wird, derart, dass durch diesen die Verbindung zwischen Folienzuschnitt (30) und Bespannungsträger insgesamt verstärkt wird.

2. Verfahren nach Anspruch 1, **dadurch gekennzeichnet, dass** die Verklebung durch Wärmeeinwirkung und in Gegenwart einer Klebemasse erfolgt, welche als Beschichtung auf einer Folie (43) aufgebracht ist.

3. Verfahren nach einem der Ansprüche 1 bis 2, **dadurch gekennzeichnet, dass** die teilweise Verklebung erzeugt wird, indem die Verklebung nur in einem vorbestimmten Teilbereich der Verbindungszone (33) erfolgt und/oder die Verklebung durch fehlende Wärmeeinwirkung nicht vollständig ausgebildet wird.

4. Verfahren nach Anspruch 3, bei welchem eine im Bespannungsträger bestehende Öffnung (25) durch den Folienzuschnitt (30) verschlossen wird, wobei die Verbindungszone (33) vorbestimmter Breite dem Rand (24) der Öffnung (25) entlang, im Überlappungsbereich (31) von Bespannungsträger und Folie (43), rund herum verläuft, **dadurch gekennzeichnet, dass** der vorbestimmte Teilbereich (56) der Verbindungszone (33) schmaler ausgebildet wird, als die Verbindungszone (33) selbst, aber ebenfalls ununterbrochen rund um die Öffnung (25) herum verläuft, und dass durch den zusätzlichen Verklebungsschritt in der weiteren Bearbeitungsstation (7) die vollständige Verklebung über die gesamte Verbindungszone (33) erzeugt wird.

5. Verfahren nach Anspruch 4, **dadurch gekennzeichnet, dass** der vorbestimmte Teilbereich (56) mit konstanter Breite dem Innenrand der Öffnung (24) entlang ausgebildet wird, so dass der äusserste Randabschnitt (34) der Verbindungszone (33) sich von der Öffnung (25) entfernt gegen den Rand des Folienzuschnitts (30) hin erstreckt.

6. Verfahren nach Anspruch 5, bei welchem ein als Deckelring (20) ausgebildeter Bespannungsträger zu einem geschlossenen Deckel bespannt wird, **dadurch gekennzeichnet, dass** die Verbindungszone (33) eine Breite von 2 mm oder weniger, bis 1,0 mm, und der vorbestimmte Teilbereich (56) eine solche von 1,5 mm bis 0,5 mm, vorzugsweise 1 mm, aufweist.

7. Verfahren nach Anspruch 3, bei welchem eine im Bespannungsträger bestehende Öffnung (24) durch den Folienzuschnitt (30) verschlossen wird, wobei die Verbindungszone (33) vorbestimmter Breite dem Rand der Öffnung (24) entlang, im Überlappungsbereich (31) von Bespannungsträger und Folie (43), rund herum verläuft, **dadurch gekennzeichnet, dass** der vorbestimmte Teilbereich der Verbindungszone (33) in vereinzelte, über die Verbindungszone (33) verteilte Unterbereiche (58) aufgeteilt wird.

8. Verfahren nach einem der Ansprüche 1 bis 7, **dadurch gekennzeichnet, dass** der Bespannungsträger vor der Verklebung in der Positionierungsstation (4) und/oder während dem Transport von der Positionierungsstation (4) zur weiteren Bearbeitungsstation (7) in Wärme gehalten wird.

9. Bearbeitungsmaschine, vorzugsweise Linearmaschine, zur Ausführung des Verfahrens nach Anspruch 1, für die Herstellung von mit einem Folienzuschnitt (30) bespannten und einen aus Metall bestehenden Bespannungsträger aufweisenden Verpackungselementen, vorzugsweise Deckel für Blechverpackungen, mit einer betriebsfähig mit einem Vorschub (2) zusammenwirkenden Positionierungsstation (4), die Positionierungsmittel für gegenseitige Positionierung eines Folienzuschnitts (30) mit einem Bespannungsträger des Verpackungselements und Mittel zur Verklebung des positionierten Folienzuschnitts (30) mit dem Bespannungsträger, im Bereich einer Verbindungszone (33), aufweist, **dadurch gekennzeichnet, dass** eine weitere, betriebsfähig mit dem Vorschub zusammenwirkende und in Vorschubrichtung hinter der Positionierungsstation (4) angeordnete Bearbeitungsstation (7) vorgesehen ist, welche Mittel zur fortgesetzten Verklebung des Folienzuschnitts (30) mit dem Bespannungsträger aufweist.

10. Bearbeitungsmaschine nach Anspruch 9, **dadurch gekennzeichnet, dass** die Mittel zur Verklebung und diejenigen zur fortgesetzten Verklebung des Folienzuschnitts (30) je Heizmittel (8,8') aufweisen, welche ausgebildet sind, Wärme an einen in die Positionierungsstation (4) eingebrachten Folienzuschnitt (30) und/oder Bespannungsträger abzugeben und vorzugsweise Druckmittel aufweisen, um Druck auf vorbestimmte Bereiche der Verbindungszone (33) des Folienzuschnitts (30) und/oder Bespannungsträgers auszuüben.

11. Bearbeitungsmaschine nach Anspruch 9 oder 10, **dadurch gekennzeichnet dass** die Mittel zur Verklebung und diejenigen zur fortgesetzten Verklebung des Folienzuschnitts (30) mit dem Bespannungsträger durch ungleiche Geometrie ausgebildet sind, auf ungleiche Bereiche (56,61;57,64;58,65;59,66) in die Verbindungszone (33) von Bespannungsträger und Folienzuschnitt (30) einzuwirken.

12. Bearbeitungsmaschine nach einem der Ansprüche 9 bis 11, **dadurch gekennzeichnet, dass** die Positionierungsmittel und die Mittel zur Verklebung ein Auflager (40) mit einer Stützfläche (41) für einen insbesondere als Deckelring (20) ausgebildeten Bespannungsträger, ein dem Auflager (40) zugeordnetes, mit Greifer (47) und Messer versehenes Folienschneidwerkzeug (46) zum Ausschneiden des Folienzuschnitts (30) aus einer dem Positionierungsmittel zuführbaren Folienbahn und mindestens einen mit dem Auflager (40) und dem Folienschneidwerkzeug (46) betriebsfähig zusammenwirkenden Stempel (50) zum Positionieren eines ausgeschnittenen Folienzuschnitts (30) auf einem auf dem Auflager (40) ruhenden Bespannungsträger, insbesondere Deckelring (20), aufweisen, wobei Auflager (40) und Stempel (50) gegeneinander zu und voneinander wegverfahrbar angeordnet sind, um zwischen einer Verklebeposition für Folienzuschnitt (30) und Bespannungsträger bzw. Belade- / Entnahmeposition für Bespannungsträger hin- und her zu wechseln, wobei der Stempel (50) im Innenraum des dem Umfang des Folienzuschnitts (30) entsprechend ausgebildeten Messers, diesem gegenüber teleskopartig verschiebbar, angeordnet ist, und wobei die einander unmittelbar zugewendeten Oberflächenbereiche der Stützfläche (41) und des Stempels (50) sich in Verklebeposition teilweise überdecken und geeignet sind, in dieser Überdeckungszone (53) Bereiche eines Bespannungsträgers und eines darauf positionierten Folienzuschnitts (30) im Kontakt für eine Verklebung zwischen sich einzuschliessen.

13. Bearbeitungsmaschine nach Anspruch 12, **dadurch gekennzeichnet, dass** die Breite der Überdeckungszone (53) von Stützfläche (41) und Stempel (50) in der Positionierungsstation (4) kleiner ist als 2 mm, vorzugsweise kleiner oder gleich 1.5 mm ist, besonders bevorzugt gleich 1 mm ist.

14. Bearbeitungsmaschine nach Anspruch 13, **dadurch gekennzeichnet, dass** die Breite der Überdeckungszone (53) 0.5 mm ist.

15. Bearbeitungsmaschine nach einem der Ansprüche 9 bis 14, **dadurch gekennzeichnet, dass** mindestens einer der einander unmittelbar zugewendeten Oberflächenbereiche (41,51;60,70) in der Überdeckungszone (52,53), vorzugsweise derjenige des Stempels (50), mindestens eine Zone eines flächigen Rücksprungs aufweist, die den für die Verklebung kontaktwirksamen Oberflächenbereich der Überdeckungszone (52,53) verkleinert.

16. Bearbeitungsmaschine nach Anspruch 15, **dadurch gekennzeichnet, dass** in einem Oberflächenbereich (41,51;60,70) mehrere Rücksprünge in einem vorzugsweise gleichmässigen Muster angeordnet sind.

17. Bearbeitungsmaschine nach einem der Ansprüche 9 bis 16, **dadurch gekennzeichnet, dass** die Mittel der weiteren Bearbeitungsstation (7) zur fortgesetzten Verklebung des Folienzuschnitts (30) mit dem Bespannungsträger ein Auflager (49) mit einer umlaufenden Stützfläche (60) für einen insbesondere als Deckelring (20) ausgebildeten Bespannungsträger, und einen mit dem Auflager (49) zusammenwirkenden Stempel (55) zum fortgesetzten Verkleben eines Folienzuschnitts (30) mit einem auf dem Auflager (49) ruhenden Bespannungsträger aufweisen, wobei Auflager (49) und Stempel (55) gegeneinander zu und voneinander wegverfahrbar angeordnet sind, um zwischen einer Verklebeposition für Folienzuschnitt (30) und Deckelring (20) bzw. Belade- / Entnahmeposition für Deckelringe (20) hin- und her zu wechseln, und wobei die einander unmittelbar zugewendeten Oberflächenbereiche der Stützfläche (60) und des Stempels (55) sich in Verklebeposition teilweise überdecken und geeignet sind, in dieser Überdekkungszone Bereiche eines Bespannungsträgers und eines darauf positionierten Folienzuschnitts (30) im Kontakt für eine Verklebung zwischen sich einzuschliessen.

18. Bearbeitungsmaschine nach Anspruch 17, **dadurch gekennzeichnet, dass** die Überdeckungszone von Auflager (49) und Stempel (55) der weiteren Bearbeitungsstation (7) eine grössere Breite als diejenige in der Positionierungsstation (4) aufweist.

19. Bearbeitungsmaschine nach Anspruch 17, **dadurch gekennzeichnet, dass** die Überdeckungszone von Auflager (49) und Stempel (55) der weiteren Bearbeitungsstation (7) gleich breit ist, wie diejenige der Positionierungsstation (4).

20. Bearbeitungsmaschine nach einem der Ansprüche 18 bis 19, **dadurch gekennzeichnet, dass** mindestens einer der einander unmittelbar zugewendeten Oberflächenbereiche in der Überdeckungszone (52) der weiteren Bearbeitungsstation (7), vorzugsweise derjenige des Stempels (55), mindestens eine Zone eines flächigen Rücksprungs aufweist, die den für die Verklebung kontaktwirksamen Oberflächenbereich der Oberdeckungszone (52) verkleinert.

21. Bearbeitungsmaschine nach Anspruch 20, **dadurch gekennzeichnet, dass** die mindestens eine Rücksprungzone der weiteren Bearbeitungsstation (7) in ihrer Kontur dem kontaktwirksamen Oberflächenbereich der Überdeckungszone (53) der Positionierungsstation (4) entspricht.

22. Bearbeitungsmaschine nach einem der Ansprüche 9 bis 21, **dadurch gekennzeichnet, dass** vor der Positionierungsstation (4) und/oder vor der weiteren Bearbeitungsstation (7) Heizmittel (8,8') vorgesehen sind, um den Bespannungsträger bzw. den mit dem Folienzuschnitt (30) beklebten Bespannungsträger für den nachfolgenden Verklebungsschritt vorzuwärmen.

## Claims

1. A method for making a packaging element having a metallic cover carrier covered by a foil blank (30), preferably a lid for a package, in a processing machine having a processing station, preferably a linear machine (1), by which the foil blank (30) in the region of a connecting zone (33) is adhesively secured to the cover carrier of the packaging element, in which method in a positioning station (4) of the processing machine a foil blank (30) and a cover carrier are positioned relative to one another in a condition of being capable of being adhesively being secured to one another, **characterized in that** in the positioning station (4) directly upon the positioning a predetermined partial adhesion of the foil blank (30) and of the cover carrier to one another takes place, and **in that** in a further processing station (7) an additional adhesion step is executed so that by way of this the connection between the foil blank (30) and the cover carrier as a whole is strengthened.

2. A method according to claim 1 further **characterized in that** the adhesion takes place through the effect of heat and in the presence of an amount of adhesive which is applied to a foil (43) as a coating layer.

3. A method according to one of claims 1 or 2, further **characterized in that** the partial adhesion is created **in that** the adhesion is placed only in a predetermined partial region of the connecting zone (33) and/or the adhesion because of insufficient heat effect is not entirely formed.

4. A method according to claim 3, in which an opening (25) in the cover carrier is closed by the foil blank (30), with the connecting zone (33) of a predetermined width running along the edge (24) of and around the opening (25) in an overlapping region (31) of the cover carrier and of the foil (43), further **characterized in that** the predetermined partial region (56) of the connecting zone (33) is formed smaller than the connecting zone (33) itself, but likewise runs uninterruptedly around the opening (25), and **in that** by way of the additional adhesion step in the further processing station (7) a compete adhesion over the entire connecting zone (33) is created.

5. A method according to claim 4, further **characterized in that** the predetermined partial region (56) is formed with a constant width along the inside edge of the opening (24), so that the outermost edge section (34) of the connecting zone (33) spaced from the opening (25) extends to the edge of the foil blank (30).

6. A method according to claim 5, in which the cover carrier formed as a lid ring (20) is covered to form a closed lid, further **characterized in that** the connecting zone (33) has a width of 2mm or less, down to 1.0mm, and the predetermined partial region (56) has a width of from 1.5mm to 0.5mm, preferably 1mm.

7. A method according to claim 3 in which an opening (24) existing in the cover carrier is closed by the foil blank (30) with the connecting zone (33) having a predetermined width and running around the opening along the edge of the opening (24) in the overlapping region (31) of the cover carrier and the foil (43), further **characterized in that** the predetermined partial region of the connecting zone (33) is divided into individualized subregions (58) along the connecting zone (33).

8. A method according to one of claims 1 to 7, further **characterized in that** the cover carrier before the adhesion in the positioning station (4) and/or during the conveyance from the positioning station (4) to the further processing station (7) is held in a heated condition.

9. A processing machine, preferably a linear machine, for carrying out the method according to claim 1, for the making of package elements having a metallic cover carrier with a foil blank (30), preferably lids for packages made of sheet material, with an operable positioning station (4) cooperating with a conveyor (2), the positioning station (4) having positioning means for opposite sidedly positioning a foil blank (30) with a cover carrier of the packaging element and means for adhering the positioned foil section (30) with the cover carrier, in the region of a connecting zone (33), **characterized in that** a further operable processing station (7) cooperating with the conveyor and located behind the positioning station (4) in the conveying direction is provided, which further processing station (7) has means for continuing the adhesion of the foil blank (30) with the cover carrier.

10. A processing machine according to claim 9 further **characterized in that** the means for adhering and the means for continuing the adhering of the foil blank (30) each have heating means (8, 8') which are formed to supply heat to a foil blank (30) and/or cover carrier brought into the positioning station (4) and preferably having pressure means for exerting pressure on predetermined regions of the connecting zone (33) of the foil blank (30) and/or the cover carrier.

11. A processing machine according to claim 9 or 10, further **characterized in that** the means for adhering and the means for continuing the adhering of the foil blank (30) to the cover carrier are formed with dissimilar geometries in order to be effective on different regions (56, 61; 57, 64; 58, 65; 59, 66) in the connecting zone (33) of the cover carrier and foil blank (30).

12. A processing machine according to one of claims 9 to 11, further **characterized in that** the positioning means and the means for adhering include a support (40) with a support surface (41) for a cover carrier especially formed as a lid ring (20), a foil cutting work tool (46) associated with the carrier (40) with a gripper (47) and a knife for cutting the foil blank (30) from a foil web delivered to the positioning means and at least one operable stamp (50) cooperating with the support (40) and the foil cutting work tool (46) for positioning a cutout foil blank (30) onto the cover carrier, especially the lid ring (20) supported on the support (40), with the support (40) and the stamp (50) being movable toward and away from one another between an adhering position for the foil blank (30) and the cover carrier and loading/removing position for the cover carrier, with the stamp (50) being arranged in the interior space of the circumference of the foil blank (30) cutting knife and being telescopically shiftable relative to the knife, and with the outer surface region of the support surface (41) and of the stamp (50) which are directly facing one another in the adhesion position partially overlapping one another and being suited in the overlapping zone (53) region of a cover carrier and the foil blank position thereon to being in contact with the cover carrier and the foil blank to form an adhesion between the cover carrier and the foil blank.

13. A processing machine according to claim 12 further **characterized in that** the width of the overlapping zone (53) of the support surface (41) and the stamp (50) in the positioning station (4) is smaller than 2mm, preferably smaller than or about 1.5mm, and especially preferably 1mm.

14. A processing machine according to claim 13, further **characterized in that** the width of the overlapping zone (53) is 0.5mm.

15. A processing machine according to one of claims 9 to 14, further **characterized in that** at least one of the outer surface regions (41, 51; 60,70) which directly face one another in the overlapping zone (52, 53), preferably that of the stamp (50), has at least one zone with a surface recess which reduces the contact effective outer surface region of the overlapping zone (52, 53) for the adhesion.

16. A processing machine according to claim 15, further **characterized in that** in an outer surface region (41, 51; 60, 70) several recesses are arranged preferably in a uniform pattern.

17. A processing machine according to one of claims 9 to 16 further **characterized in that** the means of the further processing station (7) for the continuation of the adhesion of the foil blank (30) with the cover carrier includes a support (49) with an annular support surface (60) for a cover carrier, especially a lid ring (20), and a stamp (55) cooperating with the support (49) for the continued adhesion of a foil blank (30) with a cover carrier resting on the support (49), with the support (49) and the stamp (55) being movable toward and away from one another between an adhering position for the foil blank (30) and the lid ring (20) and a loading/removing position for the lid ring (20) and with outer surface regions of the support surface (60) and of the stamp (55) which are directly facing one another in the adhering position partially covering one another and being suited in this overlapping zone region of a cover carrier and a foil blank (30) position on the cover carrier to contact the cover carrier and the foil blank thereon for adhering the cover carrier and the foil blank to one another.

18. A processing machine according to claim 17 further **characterized in the** covering zone of the support (49) and the stamp (55) in the further processing station (7) having a larger width than that in the positioning station (4).

19. A processing machine according to claim 17, further **characterized in that** the covering zone of the support (49) and the stamp (55) in the further processing station (7) being of the same width as that of positioning station (4).

20. A processing machine according to one of claims 18 to 19 further **characterized in that** at least one of the outer surface regions which directly face one another in the covering zone (53) of the further processing station (7), preferably that of the stamp (55), has at least one zone with a surface recess which reduces the outer surface region of the covering zone (52) which is contact effective for the adhesion.

21. A processing machine according to claim 20 further **characterized in that** the at least one recess of the further processing station (7) in its contour corresponds to the contact effective outer surface regions of the covering zone (53) of the positioning station (4).

22. A processing machine according one of claims 9 to 21 further **characterized in that** in advance of the positioning station (4) and/or in advance of the further processing station (7) heating means (8, 8') are provided to preheat the cover carrier or the cover carrier with the adhered foil blank (30) for the following adhesion step.

## Revendications

1. Procédé de fabrication d'un élément d'emballage revêtu d'une coupe de feuille (30) et comportant un support de revêtement en métal, de préférence d'un couvercle pour un emballage, dans une machine d'usinage, de préférence une machine linéaire (1), comportant des postes d'usinage dans lequel la coupe de feuille (30) est collée, dans la région d'une zone de liaison (33), avec le support de revêtement de l'élément d'emballage, une coupe de feuille (30) et un support de revêtement étant positionnés à cet effet l'un par rapport à l'autre de manière à pouvoir être collés, dans un poste de positionnement (4) de la machine d'usinage, **caractérisé en ce que** dans ce poste de positionnement (4) il est procédé, immédiatement après le positionnement, à un collage déterminé partiel de la coupe de feuille (30) et du support de revêtement, et dans un autre poste d'usinage (7) il est procédé à une étape de collage supplémentaire de telle sorte que grâce à celle-ci, la liaison entre la coupe de feuille (30) et le support de revêtement soit dans l'ensemble renforcée.

2. Procédé selon la revendication 1, **caractérisé en ce que** le collage s'effectue par action de la chaleur et en présence d'une pâte adhésive qui est appliquée en tant que revêtement sur une feuille (43).

3. Procédé selon l'une quelconque des revendications 1 ou 2, **caractérisé en ce que** dans le collage partiel obtenu le collage ne s'effectue que dans une région partielle prédéterminée de la zone de liaison (33) et/ou le collage est réalisé incomplètement par absence d'action de la chaleur.

4. Procédé selon la revendication 3, dans lequel une ouverture (25), se trouvant dans le support de revêtement, est fermée par la coupe de feuille (30), la zone de liaison (33) de largeur prédéterminée s'étendant le long du bord (24) de l'ouverture (25), tout autour dans la zone de recouvrement (31) du support de revêtement et de la feuille (43), **caractérisé en ce que** la région partielle (56) prédéterminée de la zone de liaison (33) est réalisée plus étroite que la zone de liaison (33) elle-même, mais s'étend également de manière ininterrompue tout autour de l'ouverture (25), et **en ce que** du fait de l'étape de collage supplémentaire dans l'autre poste d'usinage (7), le collage complet est produit sur toute la zone de liaison (33).

5. Procédé selon la revendication 4, **caractérisé en ce que** la région partielle (56) prédéterminée de largeur constante est réalisée le long du bord intérieur de l'ouverture (24), de sorte que le segment de bordure (34) le plus extérieur de la zone de liaison (33) s'étend depuis l'ouverture (25) vers le bord de la coupe de feuille (30).

6. Procédé selon la revendication 5, dans lequel un support de revêtement, réalisé sous la forme d'un anneau de couvercle (20), est revêtu pour former un couvercle fermé, **caractérisé en ce que** la zone de liaison (33) présente une largeur de 2 mm ou moins, jusqu'à 1,0 mm, et la région partielle (56) prédéterminée présente une largeur de 1,5 mm à 0,5 mm, de préférence de 1 mm.

7. Procédé selon la revendication 3, dans lequel une ouverture (24), réalisée dans le support de revêtement, est fermée par la coupe de feuille (30), la zone de liaison (33) de largeur prédéterminée s'étendant le long du bord de l'ouverture (24), tout autour dans la zone de recouvrement (31) du support de revêtement et de la feuille (43), **caractérisé en ce que** la région partielle prédéterminée de la zone de liaison (33) est divisée en sous-régions (58) distribuées sur la zone de liaison (33).

8. Procédé selon l'une quelconque des revendications 1 à 7, **caractérisé en ce que** le support de revêtement est maintenu en chaleur avant le collage dans le poste de positionnement (4) et/ou pendant le transport du poste de positionnement (4) vers l'autre poste d'usinage (7).

9. Machine d'usinage, de préférence machine linéaire, pour la mise en oeuvre du procédé selon la revendication 1, pour la fabrication d'éléments d'emballage revêtus d'une coupe de feuille (30) et comportant un support de revêtement en métal, de préférence d'un couvercle pour emballage en tôle, avec un poste de positionnement (4) coopérant pour le fonctionnement avec un organe d'avance (2), lequel poste comporte des moyens de positionnement pour le positionnement réciproque d'une coupe de feuille (30) avec un support de revêtement de l'élément d'emballage, ainsi que des moyens pour le collage de la coupe de feuille (30) positionnée avec le support de revêtement, dans la région d'une zone de liaison (33), **caractérisée en ce qu'**il est prévu un autre poste d'usinage (7) coopérant pour le fonctionnement avec l'organe d'avance et disposé dans le sens d'avance en aval du poste de positionnement (4), lequel poste d'usinage comporte des moyens pour la poursuite du collage de la coupe de feuille (30) avec le support de revêtement.

10. Machine d'usinage selon la revendication 9, **caractérisée en ce que** les moyens pour le collage et les moyens pour la poursuite du collage de la coupe de feuille (30) comportent tous des moyens de chauffage (8, 8') qui sont conçus de manière à fournir de la chaleur à une coupe de feuille (30) et/ou support de revêtement introduit dans le poste de positionnement (4), ainsi que de préférence des moyens de pression, afin d'exercer une pression sur des régions prédéterminées de la zone de liaison (33) de la coupe de feuille (30) et/ou du support de revêtement.

11. Machine d'usinage selon l'une quelconque des revendications 9 ou 10, **caractérisée en ce que** les moyens pour le collage et les moyens pour la poursuite du collage de la coupe de feuille (30) avec le support de revêtement sont réalisés par une géométrie différente pour agir sur des régions différentes (56, 61 ; 57, 64 ; 58, 65 ; 59, 66) dans la zone de liaison (33) du support de revêtement et de la coupe de feuille (30).

12. Machine d'usinage selon l'une quelconque des revendications 9 à 11, **caractérisée en ce que** les moyens de positionnement et les moyens pour le collage comportent un support (40) avec une surface d'appui (41) pour un support de revêtement réalisé en particulier sous la forme d'un anneau de couvercle (20), un outil de découpage de feuille (46) associé au support (40) et pourvu d'une pince (47) et d'une lame pour découper la coupe de feuille (30) dans une bande de feuille à amener aux moyens de positionnement, ainsi qu'au moins un piston (50) coopérant en fonctionnement avec le support (40) et l'outil de découpage de feuille (46), pour positionner une coupe de feuille (30) découpée sur un support de revêtement reposant sur le support (40), en particulier un anneau de couvercle (20), le support (40) et le piston (50) étant disposés de manière à pouvoir être déplacés l'un vers l'autre et éloignés l'un de l'autre, afin de passer alternativement entre une position de collage pour coupe de feuille (30) et support de revêtement et/ou de chargement/une position de prélèvement pour support de revêtement, le piston (50) étant disposé dans le volume intérieur de la lame réalisée conformément au pourtour de la coupe de feuille (30), de manière à pouvoir coulisser de façon télescopique par rapport à celle-ci, et les zones de surface, directement tournées l'une vers l'autre de la surface d'appui (41) et du piston (50) se recouvrant partiellement dans la position de collage et étant propres à enfermer entre elles, dans cette zone de recouvrement (53), des régions d'un support de revêtement et d'une coupe de feuille (30) positionnée sur celui-ci, en contact pour un collage.

13. Machine d'usinage selon la revendication 12, **caractérisée en ce que** la largeur de la zone de recouvrement (53) de la surface d'appui (41) et du piston (50) dans le poste de positionnement (4), est inférieure à 2 mm, de préférence inférieure ou égale à 1,5 mm, de manière particulièrement préférée égale à 1 mm.

14. Machine d'usinage selon la revendication 13, **caractérisée en ce que** la largeur de la zone de recouvrement (53) est de 0,5 mm.

15. Machine d'usinage selon l'une quelconque des revendications 9 à 14, **caractérisée en ce qu'**au moins l'une des régions de surface (41, 51 ; 60, 70) directement tournées l'une vers l'autre, dans la zone de recouvrement (52, 53), de préférence celle du piston (50), présente au moins une zone d'un retrait plat qui réduit la région de surface en contact pour le collage, de la zone de recouvrement (52, 53).

16. Machine d'usinage selon la revendication 15, **caractérisée en ce que** dans une région de surface (41, 51, 60, 70) sont disposés plusieurs retraits suivant un dessin de préférence régulier.

17. Machine d'usinage selon l'une quelconque des revendications 9 à 16, **caractérisée en ce que** les moyens de l'autre poste d'usinage (7) pour la poursuite du collage de la coupe de feuille (30) avec le support de revêtement, comportent un support (49) avec une surface d'appui (60) périphérique pour un support de revêtement réalisé en particulier sous la forme d'un anneau de couvercle (20), ainsi qu'un piston (55) coopérant avec le support (49) pour la poursuite du collage d'une coupe de feuille (30) avec un support de revêtement reposant sur le support (49), le support (49) et le piston (55) étant disposés de manière à être déplacés l'un vers l'autre et éloignés l'un de l'autre, pour passer alternativement entre une position de collage pour coupe de feuille (30) et anneau de couvercle (20) et/ou de chargement/une position de prélèvement pour anneaux de couvercle (20), et les régions de surface directement tournées l'une vers l'autre de la surface d'appui (60) et du piston (55) se recouvrant partiellement dans la position de collage et étant propres à enfermer entre elles dans cette zone de recouvrement, des régions d'un support de revêtement et d'une coupe de feuille (30) positionnée sur celui-ci, en contact pour un collage.

18. Machine d'usinage selon la revendication 17, **caractérisée en ce que** la zone de recouvrement du support (49) et du piston (55) de l'autre poste d'usinage (7), présente une plus grande largeur que celle du poste de positionnement (4).

19. Machine d'usinage selon la revendication 17, **caractérisée en ce que** la zone de recouvrement du support (49) et du piston (55) de l'autre poste d'usinage (7) a la même largeur que celle du poste de positionnement (4).

20. Machine d'usinage selon l'une quelconque des revendications 18 ou 19, **caractérisée en ce qu'**au moins l'une des régions de surface directement tournées l'une vers l'autre dans la zone de recouvrement (52) de l'autre poste d'usinage (7), de préférence celle du piston (55), présente au moins une zone d'un retrait plat qui réduit la région de surface en contact pour le collage, de la zone de recouvrement (52).

21. Machine d'usinage selon la revendication 20, **caractérisée en ce que** la au moins une zone de retrait de l'autre poste d'usinage (7) correspond en son contour à la région de surface en contact de la zone de recouvrement (53) du poste de positionnement (4).

22. Machine d'usinage selon l'une quelconque des revendications 9 à 21, **caractérisée en ce qu'**en amont du poste de positionnement (4) et/ou en amont de l'autre poste d'usinage (7) sont prévus de moyens de chauffage (8, 8') pour préchauffer le support de revêtement ou le support de revêtement collé avec la coupe de feuille (30), pour l'étape de collage suivante.
